# EUROPEAN PATENT APPLICATION

(11) **EP 4 775 743 A1**
(43) Date of publication of application: **15.07.2026**
(21) Application number: 24862646.7
(22) Date of filing: 26.08.2024
(51) Int. Cl.: E02F 9/00, B60L 50/60, B60L 50/75, B60L 53/14, B60L 58/12, B60L 58/40, E02F 9/20, H01M 8/00, H01M 8/04, H01M 8/04537, H01M 8/04858, H01M 8/04955, H02J 7/00

(54) **ELECTRIC CONSTRUCTION MACHINE**

(30) Priority: 06.09.2023 JP 2023144707
(71) Applicant: Hitachi Construction Machinery Co., Ltd., Tokyo 110-0015 (JP)
(72) Inventor: OSUGI Ryota, Tsuchiura-shi, Ibaraki 300-0013 (JP); YAMASHITA Masashi, Tsuchiura-shi, Ibaraki 300-0013 (JP)
(74) Representative: MERH-IP Matias Erny Reichl Hoffmann Patentanwälte PartG mbB
(86) International application number: PCT/JP2024/030280
(87) International publication number: WO 2025/052994

(57) **Abstract**

The present invention has an object to provide an electrically driven construction machine capable of downsizing a hydrogen tank which stores a fuel for a fuel cell and a heat exchanger which releases heat of a coolant for the fuel cell. Thus, in a hydraulic excavator including a machine body, an electrically driven motor which is a power source for the machine body, a fuel cell which generates electric power, and an electric power controller which controls electric power supplied to the electrically driven motor, the hydraulic excavator includes an external electric power receiver which receives electric power from a commercial electric power supply device, and the electric power controller controls electric power supplied from the fuel cell and the external electric power receiver to the electrically driven motor.

## Description

### Technical Field

The present invention relates to an electrically driven construction machine.

### Background Art

Hitherto, there has been developed a construction machine which exhausts a small amount of the greenhouse effect gas, and, for example, there has been developed an electrically driven construction machine to which a fuel cell is mounted. As a document which discloses prior art for the electrically driven construction machine on which the fuel cell is mounted, there exists, for example, Patent Document 1. In Patent Document 1, there is described an electrically driven construction machine including a body unit, a first swing unit provided between the body unit and a travel device which causes the body unit to travel, and swings the body unit, a work device connected to the body unit, and a storage unit that can be swung by a second swing unit different from the first swing unit, in which the storage unit stores a hydrogen tank which stores hydrogen and a fuel cell which uses the hydrogen supplied from the hydrogen tank to generate electric power, and in the body unit, there is disposed a hydraulic device which drives the work device.

### Prior Art Document

### Patent Document

Patent Document 1: JP-2022-180565-A

### Summary of the Invention

### Problem to be Solved by the Invention

The hydrogen serving as a fuel for the fuel cell is low in energy density compared with a diesel fuel, thus a huge hydrogen tank is required when the fuel cell is used to achieve the same continuous operation time as that of a diesel engine having the same output power, and hence mountability of the hydrogen tank poses a problem. Further, it is required to maintain a coolant for the fuel cell at a lower temperature than that of a coolant (cooling water) for the diesel engine, there is required a larger heat exchanger than that for the diesel engine having the same output power, and hence mountability of the heat exchanger also poses a problem.

The present invention has been made in view of the problems described above, and has an object to provide an electrically driven construction machine capable of downsizing a hydrogen tank which stores a fuel for a fuel cell and a heat exchanger which releases heat of a coolant for the fuel cell.

### Means for Solving the Problem

In order to achieve the object described above, according to the present invention, in an electrically driven construction machine including a machine body, an . electrically driven motor that is a power source for the machine body, a fuel cell that generates electric power, and an electric power controller that controls electric power supplied to the electrically driven motor, the electrically driven construction machine includes an external electric power receiver that receives electric power from a commercial electric power supply device, and the electric power controller controls electric power supplied from the fuel cell and the external electric power receiver to the electrically driven motor.

### Advantages of the Invention

According to the present invention, the electric power can be supplied from the external electric power receiver to the electrically driven motor, and hence it is possible to reduce the electric power supplied from the fuel cell to the electrically driven motor. As a result, a fuel consumption amount and a heat generation amount of the fuel cell are suppressed, and hence it is possible to downsize a hydrogen tank which stores a fuel for the fuel cell and a heat exchanger which releases heat of a coolant which cools the fuel cell.

### Brief Description of the Drawings

[Fig. 1] Fig. 1 is a schematic view of a hydraulic excavator according to an embodiment of the present invention.
[Fig. 2] Fig. 2 is a configuration diagram of an electric power control system in the embodiment of the present invention.
[Fig. 3] Fig. 3 is a flowchart for illustrating processing of an electric power controller in the embodiment of the present invention.
[Fig. 4] Fig. 4 is a configuration diagram for illustrating a modification example of the electric power control system in the embodiment of the present invention.
[Fig. 5] Fig. 5 is a flowchart for illustrating a modification example of the processing of the electric power controller in the embodiment of the present invention.

### Modes for Carrying Out the Invention

A description is now given of an embodiment of the present invention with reference to the drawings. In the present embodiment, the present invention is applied to a hydraulic excavator as an electrically driven construction machine according to the present invention, but the application target of the present invention is not limited to the hydraulic excavator, and the present invention can be applied to other electrically driven construction machines.

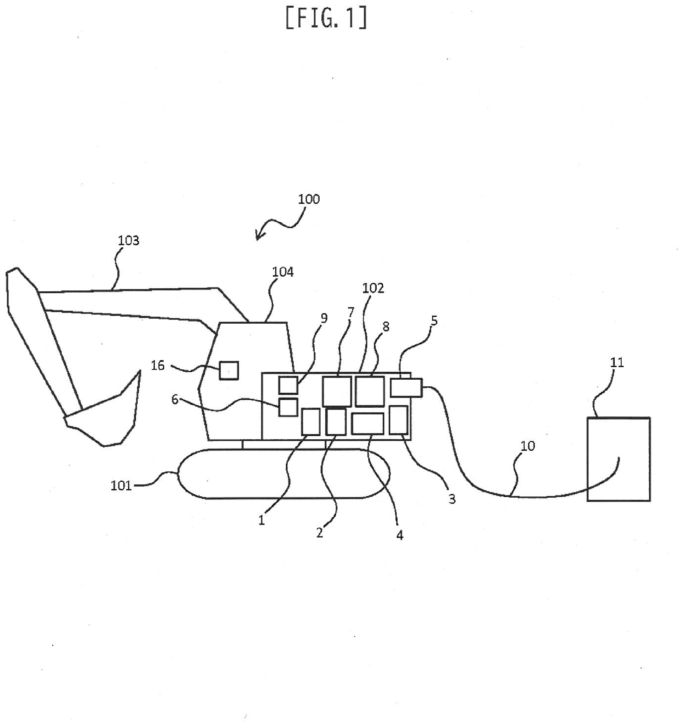

Fig. 1 is a schematic view of the hydraulic excavator in the present embodiment. A hydraulic excavator 100 includes a lower travel structure 101 of a crawler type, an upper swing structure 102 swingably mounted on the lower travel structure 101, and a front work device 103 rotatably attached to the upper swing structure 102. The lower travel structure 101, the upper swing structure 102, and the front work device 103 form a machine body of the hydraulic excavator 100. Each of the lower travel structure 101, the upper swing structure 102, and the front work device 103 is driven by a hydraulic actuator (not shown). A cab 104 on which an operator rides is provided to a front side of the upper swing structure 102. In the cab 104, there is disposed an operation device 16 for instructing the elements 101 to 103 forming the machine body about operations thereof.

To the upper swing structure 102, a hydraulic pump 1, an electrically driven motor 2, a fuel cell 3, a battery 4, an external electric power receiver 5, an electric power controller 6, a hydrogen tank 7, a heat exchanger 8, a machine controller 9, and the like are mounted. The hydraulic pump 1 is driven by the electrically driven motor 2, thereby supplying a hydraulic pressure to each hydraulic actuator. The external electric power receiver 5 is connected to a commercial electric power supply device 11 via an electric power cable 10, and receives supply of electric power from the commercial electric power supply device 11.

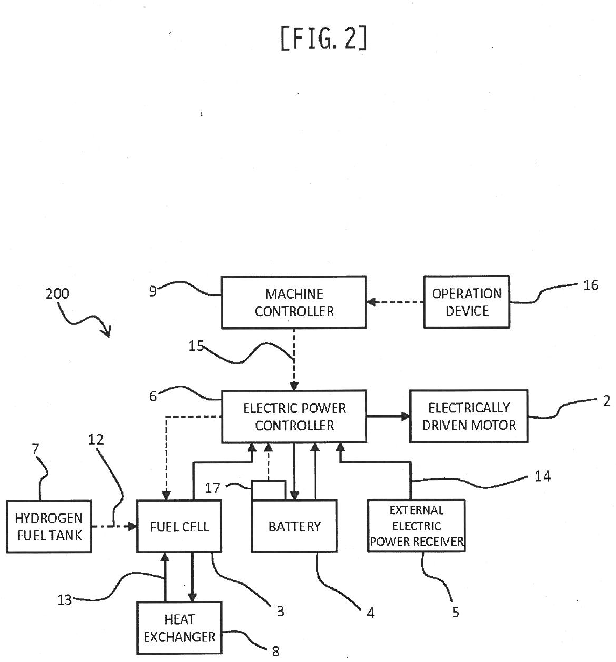

Fig. 2 is a configuration diagram of an electric drive system mounted to the hydraulic excavator 100. An electric power control system 200 includes the electrically driven motor 2, the fuel cell 3, the battery 4, the external electric power receiver 5, the electric power controller 6, the hydraulic tank 7, the heat exchanger 8, the machine controller 9, the operation device 16, and a battery controller 17. The fuel cell 3 is connected to the hydrogen tank 7 via a hydrogen fuel line 12, and receives supply of a hydrogen fuel from the hydrogen tank 7, thereby generating electric power. The heat exchanger 8 is connected to the fuel cell 3 via a coolant line 13 which circulates coolant (cooling water), and releases heat of the coolant which has cooled the fuel cell 3.

The electric power controller 6 is connected to the fuel cell 3, the battery 4, and the external electric power receiver 5 via an electric power line 14, and is connected to the fuel cell 3, the battery controller 17, and the machine controller 9 via a signal line 15. From the machine controller 9 to the electric power controller 6, a signal which notifies the electric power controller 6 of a required electric power amount of the electrically driven motor 2 is input. The machine controller 9 calculates the required electric power amount of the electrically driven motor 2 on the basis of a signal (operation amount) input from the operation device 16. The battery controller 17 measures a state of charge and a temperature of the battery 4, thereby determining a state of the battery 4 (whether or not the battery 4 can supply the electric power, and whether or not the battery 4 can be charged). From the battery controller 17 to the electric power controller 6, there is input a signal (battery state signal) indicating the state of the battery 4. From the electric power controller 6 to the fuel cell 3, a signal instructing the fuel cell 3 to generate electric power or a signal instructing the fuel cell 3 to stop is input. The electric power controller 6 controls, on the basis of the required electric power amount of the electrically driven motor 2 and the state of the battery 4, electric power supplied from the fuel cell 3, the battery 4, and the external electric power receiver 5 to the electrically driven motor 2 and electric power supplied from the fuel cell 3 and the external electric power receiver 5 to the battery 4.

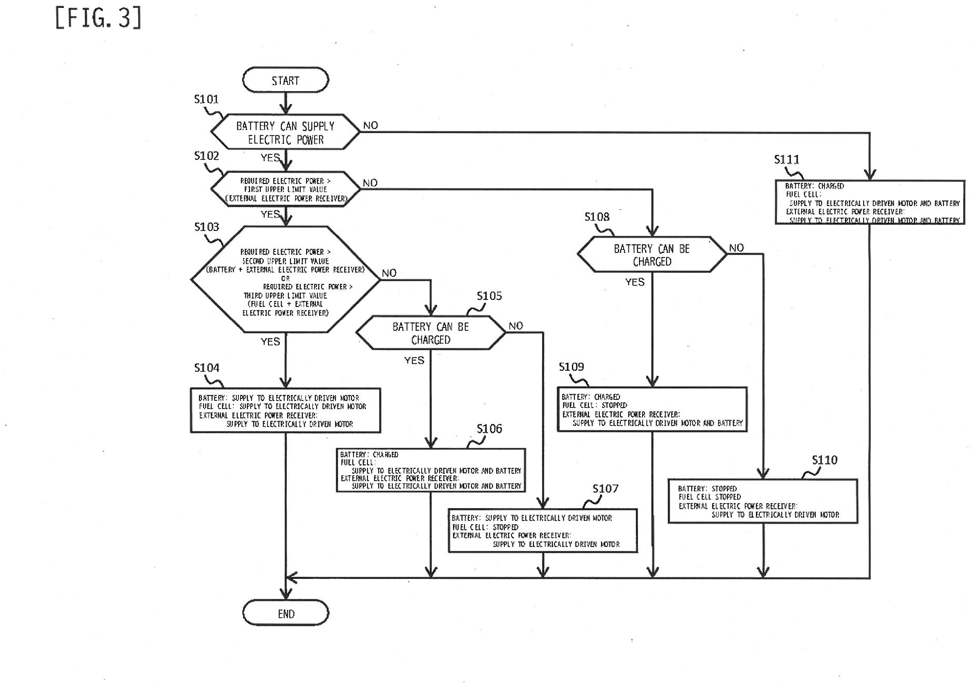

Fig 3 is a flowchart for illustrating processing of the electric power controller 6. A description is now given of each step.

The electric power controller 6 first determines whether or not the battery 4 is in a state in which the battery 4 can supply the electric power (Step S101). Whether or not the battery 4 is in the state in which the battery 4 can supply the electric power is determined on the basis of the battery state signal from the battery controller 17.

When a determination result in Step S101 is YES, the electric power controller 6 determines whether or not the required electric power amount of the electrically driven motor 2 is larger than a first upper limit value (Step S102). The first upper limit value is set to, for example, the maximum output power value of the external electric power receiver 5 or a value obtained by subtracting a predetermined margin from this maximum output power value.

When a determination result in Step S102 is YES, the electric power controller 6 determines whether or not the required electric power amount of the electrically driven motor 2 is larger than a second upper limit value or a third upper limit value (Step S103). The second upper limit value is set to, for example, a total maximum output power value of the external electric power receiver 5 and the battery 4 or a value obtained by subtracting a predetermined margin from the total maximum output power value. The third upper limit value is set to, for example, a total maximum output power value of the external electric power receiver 5 and the fuel cell 3 or a value obtained by subtracting a predetermined margin from this total maximum output power value.

When a determination result in Step S103 is YES, the electric power controller 6 causes the required electric power to be supplied from the battery 4, the fuel cell 3, and the external electric power receiver 5 to the electrically driven motor 2 (step S104), and finishes this flow. As a result, when a high load is applied to the electrically driven motor 2, it is possible to supply the required electric power from the external electric power receiver 5, the battery 4, and the fuel cell 3 to the electrically driven motor 2.

When the determination result in Step S103 is NO, the electric power controller 6 determines whether or not the battery 4 is in the chargeable state (Step S105). Whether or not the battery 4 is in the chargeable state is determined on the basis of the battery state signal from the battery controller 17.

When a determination result in Step S105 is YES, the electric power controller 6 causes the electric power to be supplied from the fuel cell 3 and the external electric power receiver 5 to the electrically driven motor 2 and the battery 4 (Step S106) ; and finishes this flow. As a result, it is possible to charge the battery 4 while the required electric power is being supplied to the electrically driven motor 2.

When the determination result in Step S105 is NO, the electric power controller 6 stops the fuel cell 3, causes the electric power to be supplied from the battery 4 and the external electric power receiver 5 to the electrically driven motor 2 (Step S107), and finishes this flow. As a result, it is possible to supply the required electric power to the electrically driven motor 2 while the fuel cell 3 is stopped.

When the determination result in Step S102 is NO, the electric power controller 6 determines whether or not the battery 4 is in the chargeable state (Step S108). The determination of whether or not the battery 4 is in the chargeable state is made on the basis of the battery state signal from the battery controller 17.

When a determination result in Step S108 is YES, the electric power controller 6 stops the fuel cell 3, causes the electric power to be supplied from the external electric power receiver 5 to the electrically driven motor 2 and the battery 4 (Step S109), and finishes this flow. As a result, it is possible to charge the battery 4 while supplying the required electric power to the electrically driven motor 2 in the state in which the fuel cell 3 is stopped.

When the determination result in Step S108 is NO, the electric power controller 6 stops the battery 4 and the fuel cell 3, causes the electric power to be supplied from the external electric power receiver 5 to the electrically driven motor 2 (Step S110), and finishes this flow. As a result, it is possible to supply the required electric power to the electrically driven motor 2 while the fuel cell 3 is stopped.

When the determination result in Step S101 is NO, the electric power controller 6 causes the electric power to be supplied from the fuel cell 3 to the electrically driven motor 2 and the battery 4, causes the electric power to be supplied from the external electric power receiver 5 to the electrically driven motor 2 and the battery 4 (Step S111), and finishes this flow. As a result, it is possible to prevent the battery 4 from being brought into an overdischarged state.

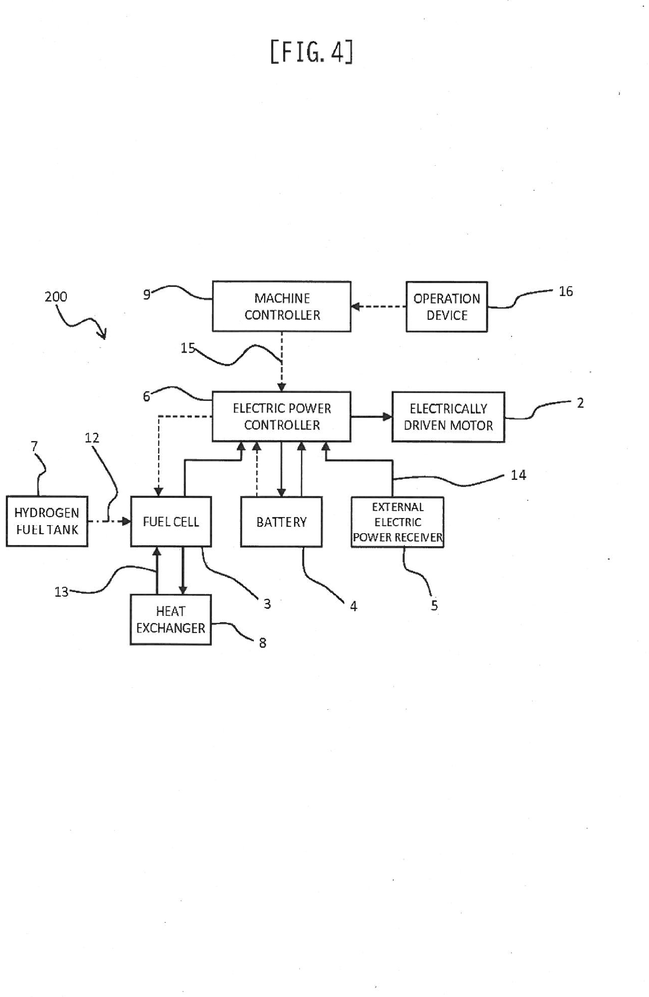

Fig. 4 is a configuration diagram for illustrating a modification example of the electric power control system 200. A different point from the configuration illustrated in Fig. 1 is such a point that the battery controller 17 is omitted. From the battery 4 to the electric power controller 6, a signal (battery state of charge signal) indicating a battery state of charge is input.

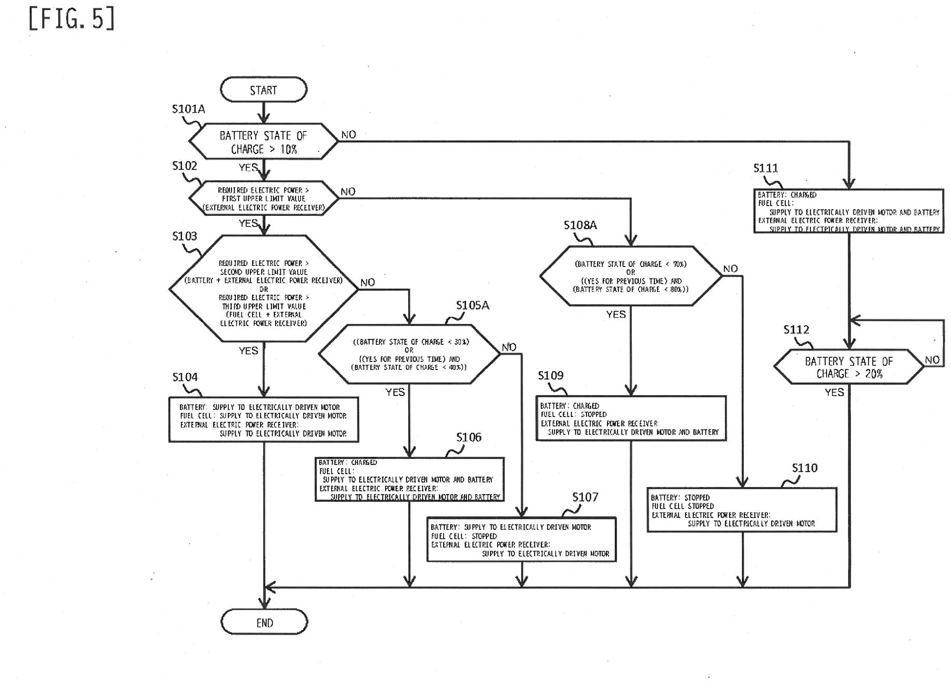

Fig 5 is a flowchart for illustrating a modification example of the processing of the electric power controller 6. A different point from the flow illustrated in Fig. 3 is such a point that Steps S101, S105, and S108 are replaced with Steps S101A, S105A, and S108A, and Step S112 is added immediately after Step S111.

In Step S101A, the electric power controller 6 determines whether or not the battery state of charge is higher than 10%. When a determination result in Step S101A is YES, the electric power controller 6 considers that the battery 4 is in the state in which the battery 4 can supply the electric power, and proceeds to Step S102. When the determination result in Step S101A is NO, the electric power controller 6 considers that the battery 4 is in the state in which the battery 4 cannot supply the electric power, and proceeds to Step S111.

In Step S105A, the electric power controller 6 determines whether or not the battery state of charge is less than 30%, or whether or not the battery state of charge is less than 40% with the determination result in Step S105A for the previous time being YES. When a determination result in Step S105A is YES, the electric power controller 6 proceeds to Step S106. When the determination result in Step S105A is NO, the electric power controller 6 proceeds to Step S107. As a result, the charge of the battery 4 and the electric power generation of the fuel cell 3 (Step S106) continue in a period from a time at which the battery state of charge falls below 30% to a time at which the battery state of charge reaches 40%, and hence it is possible to prevent hunting between the charge of the battery 4 and the electric power generation of the fuel cell 3 (Step S106), and the discharge of the battery 4 and the stop of the fuel cell 3 (Step S107).

In Step S108A, the electric power controller 6 determines whether or not the battery state of charge is less than 70%, or whether or not the battery state of charge is less than 80% with the determination result in Step S108A for the previous time being YES. When a determination result in Step S108A is YES, the electric power controller 6 proceeds to Step S109. When the determination result in Step S108A is NO, the electric power controller 6 proceeds to Step S110. As a result, the charge of the battery 4 (Step S109) continues in a period from a time at which the battery state of charge falls below 70% to a time at which the battery state of charge reaches 80%, and hence it is possible to prevent hunting between the charge of the battery 4 (Step S109) and the stop of the battery 4 (Step S110), and to prevent the over charge of the battery 4.

In Step S112, the electric power controller 6 determines whether or not the battery state of charge is higher than 20%. While the determination result in Step S112 is NO, the electric power controller 6 repeats the determination in Step S112. When the determination result in Step S112 is YES, the electric power controller 6 finishes this flow. As a result, the charge of the battery 4 (Step S111) continues in a period until the battery state of charge reaches 20%, and hence it is possible to prevent hunting between the charge of the battery 4 (Step S111) and the discharge of the battery 4 (Step S104).

### (Summary)

In the present embodiment, in the hydraulic excavator 100 including the machine body 101 to 103, the electrically driven motor 2 being the power source for the machine body 101 to 103, the fuel cell 3 which generates the electric power, and the electric power controller 6 which controls the electric power supplied to the electrically driven motor 2, the hydraulic excavator 100 includes the external electric power receiver 5 which receives the electric power from the commercial electric power supply device 11, and the electric power controller 6 controls the electric power supplied from the fuel cell 3 and the external electric power receiver 5 to the electrically driven motor 2.

According to the embodiment configured as described above, the electric power can be supplied from the external electric power receiver 5 to the electrically driven motor 2, and hence the electric power supplied from the fuel cell 3 to the electrically driven motor 2 can be reduced. As a result, a fuel consumption amount and a heat generation amount of the fuel cell 3 are suppressed, and hence it is possible to downsize the hydrogen tank 7 which stores the fuel for the fuel cell 3 and the heat exchanger 8 which release the heat of the coolant which cools the fuel cell 3.

Moreover, the hydraulic excavator 100 in the present embodiment includes the operation device 16 for instructing the elements 101 to 103 forming the machine body about operations thereof, and the electric power controller 6 determines the electric power amount supplied from the fuel cell 3 to the electrically driven motor 2 and the electric power amount supplied from the external electric power receiver 5 to the electrically driven motor 2 on the basis of the required electric power amount calculated on the basis of the operation amount of the operation device 16. As a result, it is possible to supply the required electric power from the fuel cell 3 and the external electric power receiver 5 to the electrically driven motor 2.

Moreover, the hydraulic excavator 100 in the present embodiment includes the battery 4 which can supply the electric power to the electrically driven motor 2, and the electric power controller 6 causes the electric power to be supplied from the battery 4, the fuel cell 3, and the external electric power receiver 5 to the electrically driven motor 2 when the required electric power amount is higher than the first electric power threshold value (second upper limit value) set on the basis of the total maximum output power value of the external electric power receiver 5 and the battery 4 or when the required electric power amount is larger than the second electric power threshold value (third upper limit value) set on the basis of the total maximum output power value of the external electric power receiver 5 and the fuel cell 3. As a result, when a high load is applied to the electrically driven motor 2, it is possible to supply the required electric power from the battery 4, the fuel cell 3, and the external electric power receiver 5 to the electrically driven motor 2.

Moreover, the electric power controller 6 in the present embodiment causes the electric power to be supplied from the fuel cell 3 to the electrically driven motor 2 and the battery 4, and causes the electric power to be supplied from the external electric power receiver 5 to the electrically driven motor 2 and the battery 4 when the state of charge of the battery 4 is equal to or smaller than the predetermined first battery threshold value (10%) at the drive time of the electrically driven motor 2. As a result, it is possible to prevent the battery 4 from being brought into the overdischarged state.

Moreover, the electric power controller 6 in the present embodiment determines whether or not the state of charge of the battery 4 is smaller than the second battery threshold value (70%) set so as to be larger than the first battery threshold value (10%) in the case in which the required electric power amount is equal to or smaller than the third electric power threshold value (first upper limit value) set on the basis of the maximum output power value of the external electric power receiver 5, stops the electric power supply from the fuel cell 3 and causes the electric power to be supplied from the external electric power receiver 5 to the electrically driven motor 2 and the battery 4 when the electric power controller 6 determines that the state of charge of the battery 4 is smaller than the second battery threshold value, and stops the electric power supply from the battery 4 and the fuel cell 3 and causes the electric power to be supplied from the external electric power receiver 5 to the electrically driven motor 2 when the electric power controller 6 determines that the state of charge of the battery 4 is equal to or larger than the second battery threshold value. As a result, it is possible to supply surplus electric power of the external electric power receiver 5 to the battery 4, thereby maintaining the battery 4 in a highly charged state while supplying the required electric power from the external electric power receiver 5 to the electrically driven motor 2 in the state in which the fuel cell 3 is stopped.

Moreover, the electric power controller 6 in the present embodiment determines whether or not the state of charge of the battery 4 is equal to or smaller than the third battery threshold value (30%) set so as to be larger than the first battery threshold value and smaller than the second battery threshold value (70%) in the case in which the required electric power amount is larger than the third electric power threshold value (first upper limit value), the required electric power amount is equal to or smaller than the first electric power threshold value (second upper limit value), and the required electric power amount is equal to or smaller than the second electric power threshold value (third upper limit value), causes the electric power to be supplied from the fuel cell 3 and the external electric power receiver 5 to the electrically driven motor 2 and the battery 4 when the electric power controller 6 determines that the state of charge of the battery 4 is smaller than the third battery threshold value, and stops the electric power supply from the fuel cell 3 and causes the electric power to be supplied from the battery 4 and the external electric power receiver 5 to the electrically driven motor 2 when the electric power controller 6 determines that the state of charge of the battery 4 is equal to or larger than the third battery threshold value. As a result, it is possible to prevent the battery 4 from being brought into a scarcely charged state while supplying the required electric power to the electrically driven motor 2.

The embodiment according to the present invention has been described in details, but the present invention is not limited to the embodiment described above, and includes various modification examples. For example, the embodiment described above is detailed for the sake of an easy-to-understand description of the present invention, and the present invention is not necessarily limited to the embodiment including all the described configurations.

### Description of Reference Characters

- 1:: hydraulic pump
- 2:: electrically driven motor
- 3:: fuel cell
- 4:: battery
- 5:: external electric power receiver
- 6:: electric power controller
- 7:: hydrogen tank
- 8:: heat exchanger
- 9:: machine controller
- 10:: electric power cable
- 11:: commercial electric power supply device
- 12:: hydrogen fuel line
- 13:: coolant line
- . 14:: electric power line
- 15:: signal line
- 16:: operation device
- 17:: battery controller
- 100:: hydraulic excavator (electrically driven construction machine)
- 101:: lower travel structure (machine body)
- 102:: upper swing structure (machine body)
- 103:: front work device (machine body)
- 200:: electric power control system

## Claims

1. An electrically driven construction machine, comprising:
a machine body;
an electrically driven motor that is a power source for the machine body;
a fuel cell that generates electric power; and
an electric power controller that controls electric power supplied to the electrically driven motor, wherein
the electrically driven construction machine includes an external electric power receiver that receives electric power from a commercial electric power supply device, and
the electric power controller controls electric power supplied to the electrically driven motor from the fuel cell and the external electric power receiver.

2. The electrically driven construction machine according to claim 1, wherein
the electrically driven construction machine includes an operation device that is used to instruct the machine body about an operation thereof, and
the electric power controller is configured to determine an electric power amount supplied from the fuel cell to the electrically driven motor and an electric power amount supplied from the external electric power receiver to the electrically driven motor, on a basis of a required electric power amount calculated based on an operation amount of the operation device.

3. The electrically driven construction machine according to claim 2, wherein
the electrically driven construction machine includes a battery that is capable of supplying electric power to the electrically driven motor, and
the electric power controller is configured to cause electric power to be supplied from the battery, the fuel cell, and the external electric power receiver to the electrically driven motor in a case in which the required electric power amount is larger than a first electric power threshold value set on a basis of a total maximum output power value of the external electric power receiver and the battery or in a case in which the required electric power amount exceeds a second electric power threshold value set on a basis of a total maximum output power value of the external electric power receiver and the fuel cell.

4. The electrically driven construction machine according to claim 3, wherein
the electric power controller is configured to cause electric power to be supplied from the fuel cell to the electrically driven motor and the battery and cause electric power to be supplied from the external electric power receiver to the electrically driven motor and the battery in a case in which a state of charge of the battery is equal to or smaller than a predetermined first battery threshold value at a drive time of the electrically driven motor.

5. The electrically driven construction machine according to claim 4, wherein
the electric power controller is configured to
determine whether or not the state of charge of the battery is smaller than a second battery threshold value set so as to be larger than the first battery threshold value, in a case in which the required electric power amount is equal to or smaller than a third electric power threshold value set on a basis of a maximum output power value of the external electric power receiver,
stop electric power supply from the fuel cell and cause electric power to be supplied from the external electric power receiver to the electrically driven motor and the battery in a case in which the electric power controller determines that the state of charge of the battery is smaller than the second battery threshold value, and
stop electric power supply from the battery and the fuel cell and cause electric power to be supplied from the external electric power receiver to the electrically driven motor in a case in which the electric power controller determines that the state of charge of the battery is equal to or larger than the second battery threshold value.

6. The electrically driven construction machine according to claim 5, wherein
the electric power controller is configured to
determine whether or not the state of charge of the battery is smaller than a third battery threshold value set so as to be larger than the first battery threshold value and smaller than the second battery threshold value, in a case in which the required electric power amount is larger than the third electric power threshold value, the required electric power amount is equal to or smaller than the first electric power threshold value, and the required electric power amount is equal to or smaller than the second electric power threshold value, and
cause electric power to be supplied from the fuel cell and the external electric power receiver to the electrically driven motor and the battery in a case in which the electric power controller determines that the state of charge of the battery is smaller than the third battery threshold value, and
stop electric power supply from the fuel cell and cause electric power to be supplied from the battery and the external electric power receiver to the electrically driven motor in a case in which the electric power controller determines that the state of charge of the battery is equal to or larger than the third battery threshold value.
